# EUROPÄISCHE PATENTSCHRIFT

(11) **EP 3 844 420 B1**
(45) Veröffentlichungstag und Bekanntmachung des Hinweises auf die Patenterteilung: **10.06.2026**
(21) Anmeldenummer: 19765650.7
(22) Anmeldetag: 29.08.2019
(51) Int. Cl.: F02B 75/06, F16C 3/20, F16C 19/46, F16C 35/073, F16F 15/26

(54) **AUSGLEICHSWELLE**
BALANCE SHAFT
ARBRE D'ÉQUILIBRAGE

(30) Priorität: 30.08.2018 DE 102018006884; 16.11.2018 DE 102018128830; 18.01.2019 DE 102019101322; 18.01.2019 DE 102019101319
(43) Veröffentlichungstag der Anmeldung: 07.07.2021
(73) Patentinhaber: Schaeffler Technologies AG & Co. KG, 91074 Herzogenaurach (DE)
(72) Erfinder: HUSSENETHER, Thomas, 90403 Nürnberg (DE); GEYER, Norbert, 91315 Höchstadt (DE); SCHREYER, Hannes, 91466 Gerhardshofen (DE); FARIA, Christof, 91054 Erlangen (DE)
(74) Vertreter: Schaeffler Technologies
(86) Internationale Anmeldenummer: PCT/DE2019/100779
(87) Internationale Veröffentlichungsnummer: WO 2020/043241

(56) Entgegenhaltungen:
- DE-A1- 102016 210 480
- DE-U1- 202017 102 212

## Beschreibung

Die Erfindung betrifft eine Ausgleichswelle zum Ausgleich von Massenkräften und/oder Massenmomenten einer Hubkolben-Brennkraftmaschine. Es handelt sich um eine gebaute Ausführung, die folgende Komponenten umfasst:
- eine Unwuchtwelle mit einem Unwuchtabschnitt und einem daran angrenzenden Lagerzapfen mit einem lediglich teilzylindrischen Umfang, dessen zylindrischer Teilumfang zur Wellenunwucht hin ausgerichtet ist,
- einen den Lagerzapfen umschließenden Lagerring, der am zylindrischen Teilumfang anliegt und mit einem dazu radial gegenüberliegenden Lagerzapfenrücken einen Freiraum begrenzt,
- und ein im Freiraum eingespanntes Spannelement, das den Lagerring radial gegen den zylindrischen Teilumfang spannt.

Eine gattungsgemäße Ausgleichswelle mit einer Unwuchtwelle und einem Lagerring, dessen Befestigung am Lagerzapfen der Unwuchtwelle über ein elastisches Spannelement zwischen dem Lagerring und dem Lagerzapfenrücken erfolgt, ist aus der DE 10 2016 210 480 A1 und der DE 20 2017 102 212 U1 bekannt.

Eine weitere gebaute Ausgleichswelle ist aus der EP 2 459 899 B1 bekannt. Dort ist ein axial äußerer Randbereich des Lagerrings mit einer axialen Seitenfläche im Bereich des zylindrischen Teilumfangs verbunden.

Der vorliegenden Erfindung liegt die Aufgabe zugrunde, eine gebaute Ausgleichswelle mit einem alternativ gefügten Lagerring anzugeben.

Die Lösung dieser Aufgabe ergibt sich durch die Merkmale des Anspruchs 1. Demnach soll das Spannelement den Lagerring gegen beidseitiges axiales Verschieben auf dem Lagerzapfen sichern, wobei das Spannelement axial formschlüssig einerseits mit der Unwuchtwelle und andererseits mit dem Lagerring verbunden ist.

Mit anderen Worten wird die axial formschlüssige Verbindung des Lagerrings mit der Unwuchtwelle mittelbar, nämlich über das Spannelement hergestellt.

In einer vorteilhaften Ausgestaltung können der zylindrische Teilumfang und demzufolge auch die Innenmantelfläche des Lagerrings gegenüber dem oder den benachbarten Unwuchtabschnitten radial zurückspringen. Dies ermöglicht es, das Verhältnis der Wellenunwucht zur Wellenmasse zugunsten des Wellenleichtbaus zu erhöhen.

Der axiale Formschluss zwischen dem Spannelement und der Unwuchtwelle kann durch eine Nut im Lagerzapfenrücken gebildet sein, wobei die Nutwände der Nut axiale Stirnseiten des Spannelements axial einfassen. Umgekehrt ist es möglich, dass das Spannelement eine Ausnehmung hat, die einen auf dem Lagerzapfenrücken angeordneten Vorsprung axial einfasst.

Der axiale Formschluss zwischen dem Spannelement und dem Lagerring kann dadurch gebildet sein, dass entweder der Lagerring das Spannelement axial einfasst oder dass - umgekehrt - das Spannelement den Lagerring axial einfasst.

Optional soll der Lagerring sowohl axial als auch in Umfangsrichtung formschlüssig mit dem Spannelement verbunden sein. Der umfängliche Formschluss kann insbesondere durch einen radial auswärtigen Vorsprung am Spannelement gebildet sein, der in eine Querbohrung im Lagerring eingreift und diesen (auch) gegen Verdrehen gegenüber dem Spannelement und damit gegenüber dem Lagerzapfen sichert. Der Vorsprung und die Querbohrung sind zweckmäßigerweise im lastfreien Umfangsbereich des Lagerzapfens positioniert.

Weitere Merkmale der Erfindung ergeben sich aus der nachfolgenden Beschreibung und aus der Zeichnung, in der ein Ausführungsbeispiel einer erfindungsgemäßen Ausgleichswelle dargestellt ist. Es zeigen:
- Figur 1:: einen Endabschnitt der Ausgleichswelle im Längsschnitt;
- Figur 2:: die Unwuchtwelle gemäß Figur 1 als Einzelteil;
- Figur 3:: das Detail X gemäß Figur 1.

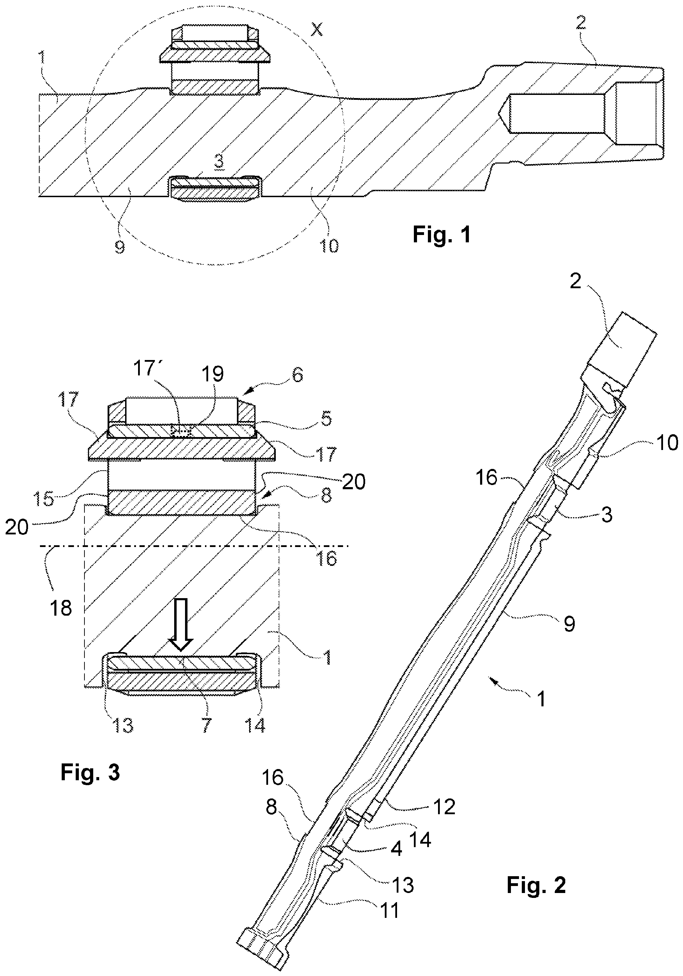

Die Figuren 1 bis 3 zeigen Komponenten und den Zusammenbau einer erfindungsgemäßen Ausgleichswelle. Diese umfasst eine als Guss- oder Schmiedeteil hergestellte Unwuchtwelle 1 mit einem endseitigen Antriebszapfen 2 für ein darauf zu montierendes Antriebsrad (nicht dargestellt) und mit Unwuchtabschnitten 9, 10, 11 und 12 sowie mit Lagerzapfen 3 und 4, die jeweils zwei der Unwuchtabschnitte 9 bis 12 verbinden. Die Lagerzapfen 3, 4 sind lediglich teilzylindrisch, und deren zylindrischer Teilumfang 7 ist zwecks Maximierung der Wellenunwucht (s. Pfeil in Figur 3) so orientiert, dass die Unwucht der Unwuchtabschnitte 9 bis 12 und die Unwucht der Lagerzapfen 3, 4 im Wesentlichen parallel und gleichgerichtet sind und den zylindrischen Teilumfang 7 im Wesentlichen umfangsmittig belasten. Der dem zylindrischen Teilumfang 7 radial gegenüberliegende (nichtzylindrische) Teilumfang des Lagerzapfens 3, 4, nachfolgend als Lagerzapfenrücken 8 bezeichnet, ist gegenüber dem auf die Wellendrehachse 18 bezogenen Umlaufkreis des zylindrischen Teilumfangs 7 freigenommen.

Die Ausgleichswelle umfasst weiterhin je Lagerzapfen 3, 4 einen diesen umschließenden Lagerring 5, ein den Lagerring 5 am Lagerzapfen 3, 4 (zerstörungsfrei) lösbar befestigendes Spannelement 15 und einen Nadelkranz 6 zur radialen Nadellagerung der Ausgleichswelle in einem Gehäuse einer Brennkraftmaschine. Die Innenlaufbahn des Nadelkranzes 6 ist durch den Lagerring 5 gebildet.

Der Umlaufkreis des zylindrischen Teilumfangs 7 ist kleiner als der Umlaufkreis der dazu benachbarten Unwuchtabschnitte 9 und 10 bzw. 11 und 12, wobei sowohl der zylindrische Teilumfang 7 als auch die Innenlaufbahn auf dem Lagerring 5 gegenüber Axialschultern 13 und 14 der Unwuchtabschnitte 9 bis 12 radial zurückspringen. Die Breite jedes Lagerrings 5 ist kleiner als der gegenseitige Abstand der Axialschultern 13, 14, die sich jeweils mit einem Umfangswinkel von vorliegend deutlich kleiner als 180° umfänglich nur partiell und im Wesentlichen spiegelsymmetrisch zu der unwuchtbedingt mit Punktlast beaufschlagten Lastzone auf dem zylindrischen Teilumfang 7 und dem daran anliegenden Lagerring 5 erstrecken. Jeder Lagerring 5 ist zwischen den Axialschultern 13, 14 mit beidseitig etwa gleichem Abstand befestigt, s. Figur 3. Die Montage der Lagerringe 5 erfolgt durch Auffädeln auf die Unwuchtwelle 1 und anschließendes Positionieren auf den Lagerzapfen 3 bzw. 4.

Die Unwucht der Unwuchtabschnitte 9 bis 12 und die Unwucht der daran angrenzenden Lagerzapfen 3, 4 sind zwecks Maximierung der Wellenunwucht (s. Pfeil in Figur 3) im Wesentlichen parallel und gleichgerichtet, wobei jeder zylindrische Teilumfang 7 umfänglich so ausgerichtet ist, dass er umfänglich im Wesentlichen mittig belastet ist.

Die vorliegend aus Kunststoff und alternativ aus federhartem Metallblech bestehenden Spannelemente 15 haben einen näherungsweise halbmondförmigen Querschnitt und sind unter elastischer Verformung in dem radialen Freiraum eingesetzt, der durch den Lagerzapfenrücken 8 und die Innenmantelfläche des Lagerrings 5 begrenzt wird. Dabei beaufschlagt die radiale Vorspannkraft des Spannelements 15 den Lagerring 5 in die zur Wellenunwuchtrichtung entgegen gesetzte Richtung, so dass der Lagerring 5 in haftender Anlage am zylindrischen Teilumfang 7 gehalten wird.

Die axiale Befestigung der Lagerringe 5 auf den Lagerzapfen 3, 4 erfolgt jeweils (über die spannkraftbedingte Haftreibung hinaus) über axialen Formschluss zwischen dem Spannelement 15 und der Unwuchtwelle 1 einerseits und zwischen dem Spannelement 15 und dem Lagerring 5 andererseits. Damit ist zum einen das Spannelement 15 gegen beidseitiges axiales Verschieben gegenüber der Unwuchtwelle 1 gesichert, und zum anderen ist jeder Lagerring 5 gegen beidseitiges axiales Verschieben gegenüber dem Spannelement 15 und mittels des Spannelements 15 folglich auch gegenüber der Unwuchtwelle 1 gesichert. Eine unmittelbare axiale Formschlussverbindung des Lagerrings 5 mit der Unwuchtwelle 1 existiert nicht.

Im dargestellten Ausführungsbeispiel ist der axiale Formschluss zwischen dem Spannelement 15 und der Unwuchtwelle 1 durch eine im Lagerzapfenrücken 8 eingebrachte Nut 16 mit quer zur Wellendrehachse 18 verlaufenden Nutwänden gebildet, die axiale Stirnseiten 20 des Spannelements 15 axial praktisch spielfrei einfassen. Der axiale Formschluss zwischen dem Spannelement 15 und dem Lagerring 5 ist durch radial auswärtige Vorsprünge 17 am Spannelement 15 gebildet, die die Stirnseiten des Lagerrings 5 ebenfalls axial praktisch spielfrei einfassen.

Unter dem Begriff 'axial praktisch spielfrei' ist entweder eine axial spielfreie Einfassung oder eine axial spielbehaftete Einfassung zu verstehen, deren Axialspiel maximal so bemessen ist, dass ein Axialanlauf des Lagerrings 5 unmittelbar an der Unwuchtwelle 1 ausgeschlossen ist.

Die Vorsprünge 17 sind als Schnapphaken mit Einführfasen ausgebildet, um beim Einclipsen des Spannelements 15 zwischen den Lagerzapfenrücken 8 und den Lagerring 5 elastisch in radial einwärtiger Richtung ausweichen können.

In einer Alternativausführung können die Schnapphaken durch einen in Figur 3 gepunktet eingezeichneten Vorsprung 17' am Spannelement 15 ergänzt oder ersetzt werden, der in eine Querbohrung 19 im Lagerring 5 eingreift und diesen somit - über die Haftreibung des Lagerrings 5 am zylindrischen Teilumfang 7 hinaus - auch formschlüssig gegen Verdrehen gegenüber dem Lagerzapfen 3, 4 sichert. Der Vorsprung 17' und damit auch die Querbohrung 19 sind diametral zur Lastzone im lastfreien Umfangsbereich des Lagerzapfens 3, 4 positioniert.

## Patentansprüche

1. Ausgleichswelle, umfassend:
- eine Unwuchtwelle (1) mit einem Unwuchtabschnitt (9, 10, 11, 12) und einem daran angrenzenden Lagerzapfen (3, 4) mit einem lediglich teilzylindrischen Umfang, dessen zylindrischer Teilumfang (7) zur Wellenunwucht hin ausgerichtet ist,
- einen den Lagerzapfen (3, 4) umschließenden Lagerring (5), der am zylindrischen Teilumfang (7) anliegt und mit einem dazu radial gegenüberliegenden Lagerzapfenrücken (8) einen Freiraum begrenzt,
- und ein im Freiraum eingespanntes Spannelement (15), das den Lagerring (5) radial gegen den zylindrischen Teilumfang (7) spannt,
**dadurch gekennzeichnet, dass** das Spannelement (15) den Lagerring (5) gegen beidseitiges axiales Verschieben auf dem Lagerzapfen (3, 4) sichert, wobei das Spannelement (15) axial formschlüssig einerseits mit der Unwuchtwelle (1) und andererseits mit dem Lagerring (5) verbunden ist.

2. Ausgleichswelle nach Anspruch 1, **dadurch gekennzeichnet, dass** der zylindrische Teilumfang (7) gegenüber dem Unwuchtabschnitt (9, 10, 11, 12) radial zurückspringt.

3. Ausgleichswelle nach Anspruch 1 oder 2, **dadurch gekennzeichnet, dass** der Formschluss zwischen dem Spannelement (15) und der Unwuchtwelle (1) durch eine Nut (16) im Lagerzapfenrücken (8) gebildet ist, deren Nutwände axiale Stirnseiten (20) des Spannelements (15) axial einfassen.

4. Ausgleichswelle nach einem der vorhergehenden Ansprüche, **dadurch gekennzeichnet, dass** der Formschluss zwischen dem Spannelement (15) und dem Lagerring (5) durch radial auswärtige Vorsprünge (17) am Spannelement (15) gebildet ist, die die Stirnseiten des Lagerrings (5) axial einfassen.

5. Ausgleichswelle nach einem der vorhergehenden Ansprüche, **dadurch gekennzeichnet, dass** der Formschluss zwischen dem Spannelement (15) und dem Lagerring (5) durch einen radial auswärtigen Vorsprung (17') am Spannelement (15) gebildet ist, der in eine Querbohrung (19) im Lagerring (5) eingreift und diesen formschlüssig gegen Verdrehen gegenüber dem Lagerzapfen (3, 4) sichert.

## Claims

1. A balance shaft, comprising:
- an unbalance shaft (1) having an unbalance section (9, 10, 11, 12) and an adjacent bearing pin (3, 4) with an only partially cylindrical circumference, the cylindrical part-circumference (7) of which is oriented towards the unbalanced shaft mass,
- a bearing ring (5) surrounding the bearing pin (3, 4), which bears against the cylindrical part-circumference (7) and delimits a free space with a radially opposite bearing pin back (8),
- and a clamping element (15) clamped in the free space, which clamps the bearing ring (5) radially against the cylindrical part-circumference (7),
**characterized in that** the clamping element (15) secures the bearing ring (5) against axial sliding on the bearing pin (3, 4) on both sides, the clamping element (15) being connected in an axially interlocking manner to the unbalance shaft (1) on one side and to the bearing ring (5) on the other side.

2. The balance shaft according to claim 1, **characterized in that** the cylindrical part-circumference (7) is radially recessed relative to the unbalance section (9, 10, 11, 12).

3. The balance shaft according to claim 1 or 2, **characterised in that** the interlocking connection between the clamping element (15) and the unbalance shaft (1) is formed by a groove (16) in the bearing pin back (8), the groove walls of which axially enclose axial end faces (20) of the clamping element (15).

4. The balance shaft according to any one of the preceding claims, **characterized in that** the interlocking connection between the clamping element (15) and the bearing ring (5) is formed by radially outward projections (17) on the clamping element (15), which axially enclose the end faces of the bearing ring (5).

5. The balance shaft according to any one of the preceding claims, **characterized in that** the interlocking connection between the clamping element (15) and the bearing ring (5) is formed by a radially outward projection (17') on the clamping element (15), which engages in a transverse bore (19) in the bearing ring (5) and secures this in an interlocking manner against rotation relative to the bearing pin (3, 4).

## Revendications

1. Arbre d'équilibrage, comprenant :
- un arbre à balourd (1) comportant une section de balourd (9, 10, 11, 12) et un tourillon de palier (3, 4) adjacent comportant une circonférence uniquement partiellement cylindrique, dont la circonférence partiellement cylindrique (7) est orientée vers le balourd d'arbre,
- une bague de palier (5) entourant le tourillon de palier (3, 4), qui repose contre la circonférence partiellement cylindrique (7) et définit un jeu avec un dos de tourillon de palier (8) radialement opposé,
- et un élément de serrage (15) fixé dans le jeu, qui serre la bague de palier (5) radialement contre la circonférence partiellement cylindrique (7),
**caractérisé en ce que** l'élément de serrage (15) empêche tout déplacement axial des deux côtés sur le tourillon de palier (3, 4) de la bague de palier (5), l'élément de serrage (15) étant relié axialement par complémentarité de forme d'une part à l'arbre à balourd (1) et d'autre part, à la bague de palier (5).

2. Arbre d'équilibrage selon la revendication 1, **caractérisé en ce que** la circonférence partiellement cylindrique (7) est radialement en retrait par rapport à la section de balourd (9, 10, 11, 12).

3. Arbre d'équilibrage selon la revendication 1 ou 2, **caractérisé en ce que** la liaison par complémentarité de forme entre l'élément de serrage (15) et l'arbre à balourd (1) est formée par une rainure (16) dans le dos de tourillon de palier (8), dont les parois de rainure enserrent axialement des faces avant axiales (20) de l'élément de serrage (15).

4. Arbre d'équilibrage selon l'une quelconque des revendications précédentes, **caractérisé en ce que** la liaison par complémentarité de forme entre l'élément de serrage (15) et la bague de palier (5) est formée par des saillies extérieures radiales (17) sur l'élément de serrage (15) qui enserrent axialement les faces avant de la bague de palier (5).

5. Arbre d'équilibrage selon l'une quelconque des revendications précédentes, **caractérisé en ce que** la liaison par complémentarité de forme entre l'élément de serrage (15) et la bague de palier (5) est formée par une saillie extérieure radiale (17') sur l'élément de serrage (15), qui vient en prise dans un alésage transversal (19) de la bague de palier (5) et la bloque par complémentarité de forme pour empêcher toute rotation par rapport au tourillon de palier (3, 4).
